# EUROPEAN PATENT SPECIFICATION

(11) **EP 1 221 403 B1**
(45) Date of publication and mention of the grant of the patent: **20.10.2004**
(21) Application number: 02380004.8
(22) Date of filing: 09.01.2002
(51) Int. Cl.: B62D 1/04

(54) **Multi-function steering-wheel**
Mehrfachfunktionslenkrad
Volant multifonction

(30) Priority: 09.01.2001 ES 200100047
(43) Date of publication of application: 10.07.2002
(73) Proprietor: Dalphi Metal Espana, S.A., 28006 Madrid (ES)
(72) Inventor: Gras Tous, Luis, 28006 Madrid (ES)
(74) Representative: Elzaburu, Alberto de

(56) References cited:
- DE-A- 3 917 613
- PATENT ABSTRACTS OF JAPAN vol. 015, no. 062 (E-1033), 14 February 1991 (1991-02-14) & JP 02 288117 A (TOYODA GOSEI CO LTD), 28 November 1990 (1990-11-28)

## Description

### Object of the Invention

The object of the present invention relates to a multifunction steering-wheel, in particular, to a steering wheel of the type of those which are mounted in motor vehicles, which contributes essential characteristics of innovation and notable benefits with respect to the means known and employed for the same ends in the present state of the art.

In a more specific manner, the invention proposes the act of equipping a motor car steering wheel as disclosed in DE 3917613 with a device whereby an unlimited number of functions can be selected and executed, said device being of a truly simple design, and foreseen in such a manner that it may be installed in a previously selected position, whereby it proves really comfortable to handle, within the reach of the user without the latter having to adopt uncomfortable postures or that can distract him whilst steering the vehicle. Moreover, the device proposed by the invention for its incorporation in the multifunction steering wheel, includes the additional advantage of employing a reduced number of connecting cables for the execution of all the functions for which it has been foreseen.

The field of application of the invention lies, clearly, within the industrial sector dedicated to the manufacture and/or installation of auxiliary elements for motor cars, in particular elements associated with the steering wheel.

### BACKGROUND AND SUMMARY OF THE INVENTION

The fact is generally known of the increasingly frequent utilisation of buttons incorporated on the steering wheel of a motor car, intended for the selection and control of some functions associated therewith. Such buttons are distributed in a strategic manner; organised so that they result comfortable to use and do not imply for the user any impediment whatever regarding their use, especially when said user is performing vehicle-steering tasks.

In this sense, the act, increasing widespread, is known of incorporating means on the steering wheel in order that the driver of the vehicle may operate principally, without separating his hands from the wheel, the controls associated with the radio set, cassette or CD player. All of which requires the pertinent internal wiring from the steering wheel, which in many cases comes to be bulky and complex.

Despite the known devices offering certain drawbacks, of which some have already been stated above, and being moreover limited to that specific function for which they were developed, it is also certain that they fulfil perfectly the mission for which they are intended, although they do not admit alterations or additions to the functions unless the entire system is adequately reconsidered.

The fundamental objective proposed by the present invention is the act of perfecting the systems already existing, by means of creating an improved device, capable of being installed in the steering wheel of a motor car in a comfortable position within easy reach for the user, said device being materialised in a simple floating wheel, associated with means capable of recognising the direction of rotation of said wheel for the purpose of deciding whether it is desired to select a determined function, or to increase or decrease the magnitude of that function. Mechanical means exist for securing the wheel in the chosen position, as well as a pushbutton for establishing the function selected.

The control of the different functions is carried out with the help of two microprocessors, connected by means of a suitable data bus, of those where one of them serves to encode the signals received, and the second, based on the encoded signal received from the first, performs the selection of a different output for each function.

As may be understood, the concept of the device is extremely simple, easy and comfortable to use, and it is capable of controlling an unlimited number of functions with minimum wiring between the components.

### Brief Description of the Drawings

Other characteristics and benefits of the invention shall become more clear from the detailed description that follows of a preferred embodiment thereof, taken by way of illustrative example and not restrictively, with reference to the figures appended, wherein:
Figure 1 shows a schematic of a steering wheel bearer of the multifunction device of the invention;
Figure 2 shows a schematic view in perspective, exploded, of a device constructed in accordance with the invention.
Figure 3 shows a representation of two square wave signals ab and ac, generated in the device, and out of phase with each other by a certain angle ϕ;
Figure 4 is a schematic representation in perspective, exploded, of an embodiment of the device of the invention slightly altered with respect to the representation of Figure 2;
Figure 5 shows the representation of a part fitted with flexible pins capable of rotating on the printed circuit, and
Figure 6 shows in schematic form the printed circuit employed for the generation of the signals ab and ac as a function of the position occupied by the piece of Figure 5, and of the closing of the pertinent circuit.

### Description of the Preferred Embodiments

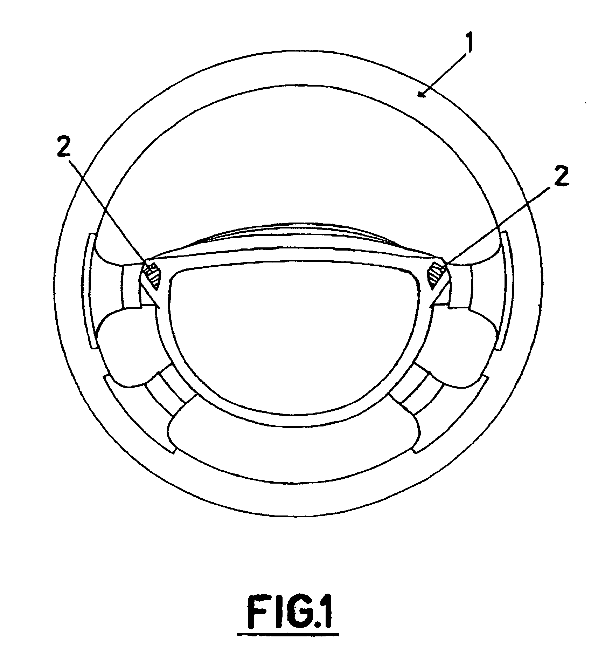

The description details the preferred form of embodiment of the invention, said descriptions to be made making use of the drawings appended, throughout which use is made of the same numerical references to designate the identical or similar parts. In this sense, making reference first to Figure 1, it is possible to appreciate the schematic representation of a multifunction steering wheel constructed according to the invention, in which the numerical reference 1 denotes the steering wheel itself, whilst reference 2 indicates the floating wheel by means of which the device of the invention is materialised, wheels 2 appearing in diametrically opposite, previously selected positions, in such a manner that the wheels 2 prove easy to operate for the user. Of course, these positions are merely by way of illustration and can change depending on the application requirements in each particular case.

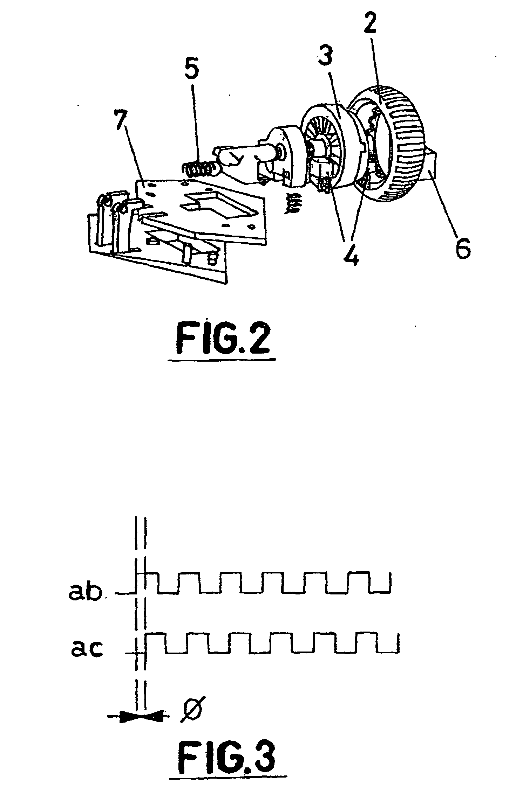

With reference to Figures 2 and 3, it is possible to appreciate a form of practical embodiment of the device, in which is distinguished the aforementioned wheel 2 accessible from the exterior, capable of coupling to an internal wheel 3, the latter having radial formations implemented in a manner such that they have some gaps having a determined angle of inclination with respect to the radial direction, and optocoupler with superimposed photosensitive areas, or radial gaps and photosensitive areas of the out-of-phase receiver, the object being to be able to obtain signals indicating the direction of rotation of the wheel. To this end, the invention has foreseen that this embodiment incorporates a pair of optocouplers 4, of those where one of them has the role of emitter and the other that of receiver of the light signal emitted by the first, receiving said signal through the radial openings of the interior wheel 3. There is an engagement mechanism of the different stable positions of the wheel 2, consisting of a ball and spring assembly 5, the ball being capable of lodging in the orifices practiced for this purpose. Each stable position of the wheel corresponds with a function, such that, with the rotation of the wheel, it is possible to select, at will, the different functions that can be performed. The confirmation of the position chosen (that is, of the function selected) is carried out mechanically by the closing of a switch 6 in association with the wheel. The invention has furthermore foreseen the use of a printed circuit board 7 for supporting the various components, and it has been designed so as to perform the transmission of the pulses.

According to the foregoing, it can be understood that, depending on the direction of rotation of the wheel, the configuration with which the latter has been endowed causes the signal to be received with a certain shift in phase, just as is shown in Figure 3. This shift in phase has been illustrated graphically as the difference between the two square wave signals ab and ac, and it has been denoted by means of the symbol ϕ. In this manner, the microprocessor means in association are in condition to recognise the direction of rotation of the wheel 2, and also the final position assumed by said wheel, so determining the variation of the magnitude in question or the change of function.

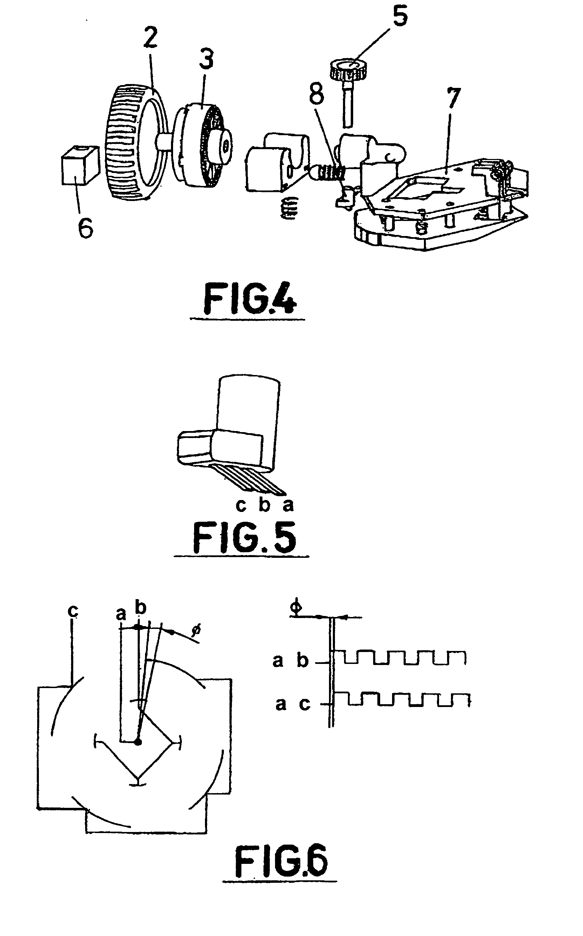

For its part, Figure 4 shows a configuration entirely equivalent, from the functional point of view, to that described in relation with Figure 2, and comprises a part 8, provided with flexible pins, such that the rotation of said part causes the aforementioned flexible pins to close or open two independent circuits for the production of the out-of-phase signals that appear also represented in Figure 6 of the drawings; it also has a switch 6 for confirming the function chosen. The rotation of said part 8 is carried out by transmission through, for example, gearing which runs directly from the floating wheel to the part 8, through the intermediate part 5.

Just as has been stated in the foregoing explanation, the possibility of closing/opening whichever of the two circuits mentioned, by means of the flexible contacts of rotary part 8 which appears illustrated in Figure 5 of the drawings, provokes the generation of both signals ab and ac. The schematic corresponding to the printed circuit is as shown in Figure 6, in which there appears clearly a first common central position identified with "a", a track "b" surrounding the central position "a", and more external portions of track "c". The generation of the signals ab and ac which appear shown in this same Figure with a phase difference ϕ, is achieved through the rotation of the wheel, one pulse of each signal coinciding with a variation in the engagement of the wheel, permitting detection of the angle turned through and the direction of rotation.

From the foregoing, the manner of operation and exploitation of the device of the invention is easily deduced. As may be understood, the floating wheel 2 is made to rotate in the direction desired, depending on the function that is to be selected, and once its position has been reached, it is sufficient to depress the switch (6) to confirm the selection that has been made.

In accordance with the invention, the assembly includes means for generating the two signals aforementioned. Each signal serves, as has already been stated, to carry out a clearly differentiated mission. For example, the pulse of the first signal can be employed advantageously to change the function in question (for example, increase or decrease the volume of a radio receiver, or whatever other function), whilst the second signal, out of phase, as is known, with respect to the first, determines the direction of rotation of the wheel, and therefore the form in which the selection is made from a pre-established initial position.

The electronic means associated with the assembly includes a first microprocessor (not shown), in which the signals are received, and once encoded, it sends them to a second microprocessor, by means of which the output that corresponds to each function is selected. Moreover said microprocessors serve to reset the selected function to 0 after a determined period of time has elapsed without the pushbutton having been actuated, that is, if no signal is received from the latter.

The monitoring of the function selected or active at any given moment, is carried out preferably by means of a display unit, which can be incorporated in the wheel, or where appropriate by means of light-emitting indicators which can be fitted in the pertinent pushbutton.

The steering wheel can also incorporate one or several pushbuttons, capable of being secured to whatever part thereof, namely, the framework or the covering of said wheel, making use of screws, clips or whatever other mechanical union that ensures the rigid fastening to the steering wheel and which impedes the projection thereof toward the occupant in the event of an accident. As may be understood, the location of said pushbuttons has to be as accessible as possible for the driver, the latter remaining in a comfortable position. Thus, they can be located on the front face or rear face of the steering wheel, on the arms, on the rim or on the central module.

Furthermore, the invention has also foreseen that the device be situated in a position, raised, with respect to the plane of the steering wheel, such that the driver actuates it only in an intentional way, and not involuntarily when the former has his hands resting on said wheel.

As may be understood, the device which has been described above, offers the additional benefit that the wiring necessary for its correct installation is considerably reduced, since use is made of only one data bus.

It is not deemed necessary to extend further the content of this description for an expert in the matter to be able to comprehend the scope and the benefits resulting from the invention, as well as to develop and implement the object thereof.

Notwithstanding, it must be understood that the invention has been described according to a preferred embodiment thereof, whereby it can be capable of modification without this implying alteration whatsoever in the essential nature of said invention, it being possible that such alterations, in particular, affect the form, the size and/or the materials of manufacture of the whole or of its parts.

## Claims

1. Multifunction steering-wheel, specially a steering-wheel of a type of those used for steering motor vehicles, able to incorporate a selection and control device operable and easily accessible from a comfortable position for the driver, situated in such a manner that it may only be actuated in a voluntary manner by said driver, said device being prepared for carrying out an unlimited number of functions, further comprising: a floating wheel (2) to which access is possible from one or more positions of the steering-wheel (1), **characterized in that** said floating wheel is capable of engagement in an intermediate wheel (3) configured so as to present a multiplicity of radial formations provided with gaps having predetermined geometry and inclination; emitting and receiving means of light signals, constituted by a pair of optocouplers (4), of those in which an emitter transmits the light signal to the receiver through the configuration of said intermediate wheel (3), so that the photosensitive areas of the receiver, out of phase, permit the angle turned through and the direction of rotation of the wheel (2) to be known; a mechanically operated switching means (6), and in association with said wheel (2); means (5) of stable positioning of the different settings of the wheel (2); a printed circuit board (7), in association with the assembly, for holding the components thereof, and electronic means for generating signals and processing the signals received.

2. Multifunction steering-wheel in accordance with claim 1, **characterised in that** each setting of the wheel (2) has an associated determined function (or the variation of the magnitude of said function), confirmation of which is carried out by depressing the switch (6) in association with said wheel (2).

3. Multifunction steering-wheel in accordance with claim 1, **characterised in that** the generation has been foreseen of two signals "ab" and "ac" out of phase with each other by an angle ϕ.

4. Multifunction steering-wheel in accordance with claim 1 in association with claim 3, **characterised in that** the electronic means include two microprocessors, of those in which a first microprocessor carries out the encoding of the signals received and transmits them to the second microprocessor by means of which the enabling is performed of the different outputs associated with each respective function.

5. Multifunction steering-wheel in accordance with claim 1, **characterised in that** in a variant of embodiment, it has been foreseen that the device incorporate a rotary part (8), operable through gearing or the like from the floating wheel (2), provided with flexible contacts, capable of moving over the printed circuit board (7), by means of which contacts the selection is made of two respective circuits which serve to generate the signals "ab" and "ac" out of phase.

6. Multifunction steering-wheel in accordance with one or more of the previous claims, **characterised in that** it further includes the provision of means of displaying the active or selected function, said means being constituted by a display panel or other presentation located in the steering-wheel itself, or where appropriate, by light-emitting indicators associated with the respective pushbuttons.

## Patentansprüche

1. Multifunktionslenkrad, besonders ein Lenkrad der Art, die zum Lenken eines Kraftfahrzeuges verwendet wird, das eine Einstellungs- und Steuerungsvorrichtung enthalten kann, die aus einer bequemen Position des Fahrers bedienbar und leicht zugänglich ist, wobei sie derart positioniert ist, dass sie durch den besagten Fahrer nur freiwillig bedient werden kann und wobei die besagte Vorrichtung entworfen ist, um eine unbegrenzte Zahl von Funktionen auszuführen, und zudem folgendes umfasst: ein schwebendes Rad (2), auf welches aus einer oder mehreren Stellungen des Lenkrades (1) zugegriffen werden kann, **dadurch gekennzeichnet, dass** das besagte schwebende Rad in ein Zwischenrad (3) einrasten kann, das so gestaltet ist, dass es eine Vielfalt an strahlenförmigen Strukturen aufweist, die mit Zwischenräumen versehen sind, die eine vorgegebene Geometrie und Neigung aufweisen; Mittel zum Senden und Empfangen von Lichtsignalen, die aus einem Paar solcher Optokoppler (4) besteht, bei welchen ein Sender über die Konfiguration des besagten Zwischenades (3) das Lichtsignal zum Empfänger überträgt, so dass die fotosensiblen außer Phase befindlichen Bereiche des Empfängers es ermöglichen, den Drehwinkel und die Drehrichtung des Rades (2) zu kennen; ein mechanisch angetriebenes und mit dem besagten Rad (2) verbundenes Umschaltmittel (6); Mittel (5) zur stabilen Positionierung der unterschiedlichen Einstellungen des Rades (2); eine mit der Anordnung verbundene gedruckte Leiterplatte (7) zum Befestigen der Komponenten derselben, und elektrische Mittel zur Erzeugung von Signalen und zur Bearbeitung der empfangenen Signale.

2. Multifunktionslenkrad nach Anspruch 1, **dadurch gekennzeichnet, dass** jede Einstellung des Rades (2) eine bestimmte zugeordnete Funktion (oder die Änderung der Größenordnung der besagten Funktion) besitzt, wobei die Bestätigung derselben durch drücken des mit dem besagten Rad (2) verbundenen Schalters (6) erfolgt.

3. Multifunktionslenkrad nach Anspruch 1, **dadurch gekennzeichnet, dass** die Erzeugung von zwei unter sich mit dem Winkel ϕ außer Phase befindlichen Signalen "ab" und "ac" vorgesehen ist.

4. Multifunktionslenkrad nach Anspruch 1 in Verbindung mit Anspruch 3, **dadurch gekennzeichnet, dass** die elektrischen Mittel zwei solcher Mikroprozessore einschließen, bei welchen ein erster Mikroprozessor die Verschlüsselung der empfangenen Signale durchführt und diese zum zweiten Mikroprozessor überträgt, womit die Freigabe der unterschiedlichen jeder entsprechenden Funktion zugeordneten Outputs vorgenommen wird.

5. Multifunktionslenkrad nach Anspruch 1, **dadurch gekennzeichnet, dass** in einer Ausführungsvariante vorgesehen ist, dass die Vorrichtung ein drehbares Teil (8) enthält, das durch ein Getriebe oder Ähnliches des schwebenden Rades (2) betätigt werden kann und mit flexiblen zur Verschiebung über die gedruckte Leiterplatte (7) fähigen Kontakten versehen ist, wobei über diese Kontakte die Auswahl zweier jeweiligen Schaltungen, welche die Erzeugung der "ab" und "ac" außer Phase befindlichen Signale dient, durchgeführt wird.

6. Multifunktionslenkrad nach einem oder mehreren der vorhergehenden Ansprüchen, **dadurch gekennzeichnet, dass** es zudem die Bereitstellung von Mitteln zur Anzeige der aktiven oder ausgewählten Funktion durch Photoemissionsanzeigen, die mit den jeweiligen Drucktasten verbunden sind, einschließen, wobei die besagten Mittel aus einer Anzeigetafel oder einer anderen Darstellungsweise, die sich in dem eigentlichen Lenkrad oder in einer geeigneten Stelle befindet, bestehen.

## Revendications

1. Volant multifonction, spécialement un volant du type utilisé pour commander des véhicules à moteur, susceptible d'incorporer un dispositif de sélection et de commande actionnable et facilement accessible depuis une position confortable pour le conducteur, situé de telle manière qu'il ne puisse être actionné volontairement que par ledit conducteur, ledit dispositif étant apte à réaliser un nombre illimité de fonctions, qui comprend en outre : une roue (2) flottante à laquelle on peut accéder depuis une ou plusieurs positions du volant (1), **caractérisé en ce que** ladite roue flottante est susceptible de s'accoupler dans une roue (3) intermédiaire configurée pour présenter une multiplicité de formations radiales pourvues d'espaces ayant une géométrie et une inclinaison prédéterminées; des moyens d'émission et de réception de signaux lumineux, constitués par une paire d'optocoupleurs (4), du type de ceux où un émetteur transmet le signal lumineux au récepteur à travers la configuration de ladite roue (3) intermédiaire, de manière à ce que les zones photosensibles du récepteur, déphasées, permettent de connaître l'angle à travers lequel on l'a tourné et le sens de rotation de la roue (2); un moyen (6) de commutation actionné mécaniquement, et en association avec ladite roue (2); des moyens (5) de mise en place stable de différents ajustements de la roue (2); une plaque (7) de circuit imprimé, en association avec l'ensemble, pour maintenir les composant de celui-ci, et des moyens électriques pour générer des signaux et traiter les signaux reçus.

2. Volant multifonction selon la revendication 1, **caractérisé en ce que** chaque ajustement de la roue (2) a une fonction déterminée associée (ou la variation de la grandeur de ladite fonction), dont la confirmation est réalisée en pressant sur l'interrupteur (6) en association avec ladite roue (2).

3. Volant multifonction selon la revendication 1, **caractérisé en ce que** l'on a prévu la génération de deux signaux "ab" et "ac" déphasés entre eux par un angle ϕ.

4. Volant multifonction selon la revendication 1 en association avec la revendication 3, **caractérisé en ce que** les moyens électriques incluent deux microprocesseurs, du type de ceux où un premier microprocesseur réalise le codage des signaux reçus et les transmet au deuxième microprocesseur au moyen duquel on réalise l'activation des différentes sorties associées à chaque fonction respective.

5. Volant multifonction selon la revendication 1, **caractérisé en ce que** dans une variante de la réalisation, on a prévu que le dispositif incorpore une partie (8) tournante, actionnable à travers un mécanisme de transmission ou similaire de la roue (2) flottante, pourvue de contacts flexibles, susceptibles de déplacer la plaque (7) de circuit imprimé, contacts au moyens desquels on réalise la sélection de deux circuits respectifs servant à générer les signaux "ab" et "ac" déphasés.

6. Volant multifonction selon une ou plusieurs des revendications précédentes, **caractérisé en ce que** l'on inclut en outre la provision de moyens montrant la fonction active ou sélectionnée, lesdits moyens étant constitués par un panneau d'affichage ou une autre présentation situé sur le propre volant, ou là où il est considéré comme approprié, par des indicateurs photo-émetteurs associés aux boutons-poussoirs respectifs.
